# EUROPÄISCHE PATENTSCHRIFT

(11) **EP 2 266 827 B1**
(45) Veröffentlichungstag und Bekanntmachung des Hinweises auf die Patenterteilung: **17.08.2011**
(21) Anmeldenummer: 09008377.5
(22) Anmeldetag: 26.06.2009
(51) Int. Cl.: B60K 1/04, B60R 16/04, B60S 5/06, B64F 1/32

(54) **Elektromotorisch antreibbares Flughafenbodenfahrzeug**
Airport land vehicle driven with an electric motor
Véhicule aéroportuaire au sol pouvant être entraîné par moteur électrique

(43) Veröffentlichungstag der Anmeldung: 29.12.2010
(60) Teilanmeldung: 11001488.3
(73) Patentinhaber: Trepel Airport Equipment GmbH, 97941 Tauberbischofsheim (DE)
(72) Erfinder: Pfeiffer, Klaus, 65205 Wiesbaden (DE); Brauer, Volker, 97922 Lauda-Königshofen (DE); Janik, Veit, 97950 Grossrinderfeld (DE)
(74) Vertreter: Quermann, Helmut

(56) Entgegenhaltungen:
- EP-A1- 1 396 466
- WO-A1-85/04387
- DE-A1- 4 338 624
- DE-A1-102007 025 332

## Beschreibung

Die Erfindung betrifft ein motorisch antreibbares Flughafenbodenfahrzeug zum Transportieren und/oder Heben von Frachtgütern, mit einem Energieträger für den Elektromotor und einer Fördereinrichtung zum Aufnehmen und horizontalen Transportieren des Energieträgers.

Auf dem Flughafenvorfeld finden die unterschiedlichsten selbstfahrenden Flughafenbodenfahrzeuge zum Transportieren und/oder Heben von Frachtgütern Verwendung.

Ein solches Fahrzeug zum Heben von Frachtgütern ist beispielsweise aus der EP 1 634 828 A1 bekannt. Die dort beschriebene Flugzeugbe- bzw. entladevorrichtung weist eine hintere Ladeplattform und eine vordere Ladeplattform auf, die heb- und senkbar sind. Die jeweilige Ladeplattform weist eine Rollenbahn zum Verschieben des Ladeguts von der einen Ladeplattform zur anderen Ladeplattform bzw., bei unmittelbarem Zusammenwirken des Fahrzeuges mit dem Flugzeugrumpf, dem Überschieben des Ladegutes in den Laderaum bzw. aus dem Laderaum des Flugzeuges auf.

Eine ähnliche Flugzeugbeladevorrichtung mit heb- und senkbaren Ladeplattformen ist aus der US 3,666,127 bekannt. Diese Ladeplattformen weisen ein Rollenbett mit Kugelrollen zum einfacheren Verschieben des Frachtguts auf. Bei diesem handelt es sich um Luftfrachtcontainer, konkret ULD-Luftfrachtcontainer (Unit Load Devices Luftfrachtcontainer), die quaderförmig mit einer abgeschrägten Seite gestaltet sind. Der jeweilige Luftfrachtcontainer wird mittels eines Transportanhängers, der konkret als Dolly ausgebildet ist, an die abgesenkte, größere Ladeplattform herangefahren und bei niveaugleichen Förderebenen vom Dolly auf die Ladeplattform übergeschoben.

Flugzeugbeladevorrichtungen mit heb- und senkbaren Ladeplattformen sind ferner aus der DE 40 40 913 A1 und DE 101 33 817 A1 bekannt.

Insbesondere beim horizontalen Fördern von Luftfrachtcontainern finden unterschiedlichste, insbesondere angetriebene Fördereinrichtungen Verwendung, beispielsweise die genannten Rollenbahnen, bei denen mehrere parallel zueinander angeordnete Transportwalzen vorgesehen sind, oder aber Fördereinrichtungen mit einem Rollenbett mit Kugelrollen, einem Multirollensystem oder sonstigen Sonderformen drehbar gelagerter Rollen, wie sie beispielsweise aus der FR 2168203 A, US 3,363,735 und GB 2 213 908 A bekannt geworden sind. Auch ist ein Transport mittels eines Transportbandes möglich.

In der Praxis finden fast ausschließlich Flughafenbodenfahrzeuge zum Transportieren und/oder Heben von Frachtgütern Verwendung, die mittels Verbrennungsmotoren angetrieben werden. Diese Antriebsart ermöglicht eine größtmögliche Flexibilität beim Einsatz der Fahrzeuge. Dies ist bei der Verwendung eines Elektromotors als Antriebsaggregat nicht gegeben, weil eine Vielzahl logistischer Probleme beim Einsatz von Elektromotoren zu beachten sind, nicht zuletzt der Wechsel des Energieträgers für den Elektromotor und die grundsätzliche Akzeptanz der Verfahrensabläufe, die beim Wechsel des Energieträgers erforderlich sind.

Ein elektromotorisch antreibbares Flughafenbodenfahrzeug, das gemäß den Merkmalen der eingangs genannten Art ausgebildet ist und als Gabelstapler ausgeführt ist, ist aus der EP 1 396 466 A1 bekannt. Der Gabelstapler ist mit einem Batteriefach versehen, das eine Rollenbahn zur Aufnahme eines Batterieblocks aufweist. Die Rollenbahn ermöglicht es, den Batterieblock mit relativ geringem Kraftaufwand zu verschieben, um den Batteriewechsel vornehmen zu können.

In der DE 10 2007 025 332 A1 ist ein Gabelstapler mit einem Batteriefach zur Aufnahme eines Batterieblocks beschrieben. Der Batterieblock ist auf seiner Unterseite mit Rollen versehen, auf denen er beim Einführen und beim Herausführen aus dem Batteriefach auf einer an das Batteriefach anlegbaren Schiebebahnanordnung verfahrbar abgestützt ist.

Aus der WO85/04387 A1 ist ein als Flugzeugbeladefahrzeug ausgebildetes, elektromotorisch antreibbares Flughafenbodenfahrzeug bekannt, wobei das Flugzeugbeladefahrzeug zwei heb- und senkbare Plattformen zur Aufnahme von Frachtgütern aufweist.

Aus der DE 43 38 624 A1 ist ein Kraftfahrzeug, insbesondere ein Personenkraftwagen, mit Elektroantrieb und Elektrobatterien bekannt. Auf dem Fahrzeugboden sind Rollen angeordnet, die das Herausschieben und Hineinschieben der Elektrobatterien beim Wechsel der Elektrobatterien erleichtern.

Aufgabe der Erfindung ist es, ein elektromotorisch antreibbares Flughafenbodenfahrzeug der eingangs genannten Art so weiterzubilden, dass ein Wechsel des Energieträgers für den Elektromotor einfach und schnell stattfinden kann.

Gelöst wird die Aufgabe durch ein elektromotorisch antreibbares Flughafenbodenfahrzeug, das gemäß den Merkmalen des Patentanspruchs 1 ausgebildet ist.

Wesentlich ist bei dem erfindungsgemäßen Flughafenbodenfahrzeug somit die besondere Lagerung und die besondere Förderung des Energieträgers. So wird der Energieträger beim Wechseln zweier Energieträger horizontal transportiert, und zwar mit seiner Unterseite auf der Unterlage aufliegend, die auf der Fördereinrichtung aufliegt. Der Energieträger wird somit nicht seitlich ergriffen, insbesondere nicht seitlich gehoben, sondern so stehend gefördert, wie eine Vielzahl anderer Gegenstände beim Transportieren im Bereich des Flughafenvorfeldes bewegt werden. So kann beispielsweise der Energieträger über einen üblicherweise auf dem Flughafenvorfeld eingesetzten Transportanhänger, insbesondere einen Dolly zum erfindungsgemäßen Flughafenbodenfahrzeug transportiert werden, wenn ein Wechsel des Energieträgers erforderlich ist. Ein von einem Zugfahrzeug gezogener Dolly ist leer, ein weiterer vom Zugfahrzeug gezogener Dolly mit einem neuen Energieträger beladen. Das Zugfahrzeug platziert den leeren Transportanhänger benachbart dem leeren Energieträger am Flughafenbodenfahrzeug und es wird der Energieträger, der vom Elektromotor dann dekonnektiert ist, auf den Dolly mittels der Fördereinrichtung übergeschoben. Dann fährt das Zugfahrzeug etwas weiter, bis der volle Energieträger benachbart der Fördereinrichtung des Flughafenbodenfahrzeuges positioniert ist. Dann wird der volle Energieträger vom Dolly zur Fördereinrichtung transportiert und es transportiert die Fördereinrichtung den Energieträger horizontal in seine gewünschte Position im Fahrzeug, so dass der Energieträger mit dem Elektromotor konnektiert werden kann.

Dieser Verfahrensablauf wird von dem auf dem Flughafenvorfeld tätigen Personal ohne weiteres akzeptiert, weil bekannte Be- und Entladeabläufe von Luftfrachtcontainern stattdessen bezüglich des Energieträgers vollzogen werden.

Vorzugsweise ist in einem Fahrgestell des Fahrzeugs die Fördereinrichtung für den Energieträger stationär gelagert. Es ist somit nicht erforderlich, die Position der Fördereinrichtung bezüglich des Fahrgestells zu verändern. Es reicht aus, den Energieträger mittels der Fördereinrichtung aus dem Flughafenbodenfahrzeug zum Dolly abzufördern bzw. vom Dolly über die Fördereinrichtung in das Fahrzeug zu fördern.

Die Fördereinrichtung kann auf unterschiedlichste Art und Weise gestaltet sein. Eine besonders einfache Gestaltung besteht in der Ausbildung eines Transportbandes, auf dem der Energieträger aufliegt. Beim Umlauf des Förderbandes wird der Energieträger aus dem Fahrzeug zum Dolly bzw. vom Dolly in das Fahrzeug bewegt. Es sind auch andere Ausbildungen der Fördereinrichtung denkbar, beispielsweise eine Rollenbahn mit mehreren parallel zueinander angeordneten Transportwalzen, ein Rollenbett mit Kugelrollen, ein Multirollensystem, Cargo Caster Rollen, Stuhlrollen, Helirolen usw.

Vorzugsweise ist der Energieträger ein Energiespeicher, der chemische Energie speichert. Hierbei ist der Begriff des Energieträgers umfassend zu versehen. So ist insbesondere vorgesehen, dass der Energieträger eine aufladbare Batterie ist oder der Energieträger ein Energiewandler ist, der chemische Energie wandelt, vorzugsweise eine Brennstoffzelle ist, insbesondere eine Wasserstoff-Sauerstoff-Brennstoffzelle ist. In den überwiegenden Fällen wird als Energieträger eine aufladbare Batterie Verwendung finden.

Der Energieträger weist insbesondere eine kastenförmige bzw. quaderförmige Form auf. Hierdurch ist der Energieträger hervorragend geeignet, mittels der Fördereinrichtung transportiert zu werden.

Gemäß einer besonderen Ausführungsform der Erfindung ist vorgesehen, dass das Förderniveau der Fördereinrichtung des erfindungsgemäßen Fahrzeugs dem Förderniveau einer Fördereinrichtung eines Transportanhängers zum Transportieren eines Luftfrachtcontainers, insbesondere dem Förderniveau einer Rollenbahn eines Dolly's zum Transportieren eines ULD-Luftfrachtcontainers entspricht. Zum Auswechseln des Energieträgers ist es somit nur erforderlich, den Transportanhänger mit dessen Fördereinrichtung benachbart der Fördereinrichtung des Flughafenbodenfahrzeuges zum Transportieren und/oder Heben von Frachtgütern zu positionieren und den Energieträger von der einen Fördereinrichtung auf die andere Fördereinrichtung zu überschieben.

Erfindungsgemäß ruht der Energieträger nicht unmittelbar auf der Fördereinrichtung, sondern auf der Unterlage, die ihrerseits auf der Fördereinrichtung ruht. Die Verwendung der Unterlage ermöglicht es, den Verfahrensablauf beim Wechseln des Energieträgers weitgehend dem des Förderns eines Luftfrachtcontainers, insbesondere eines ULD-Luftfrachtcontainers anzupassen. So weist die als Platte ausgebildete Unterlage vorzugsweise ein erstes Plattenteil und ein schwenkbar mit diesem verbundenes zweites Plattenteil auf, wobei das erste Plattenteil der Aufnahme des Energieträgers dient. Der Energieträger ist somit nur im Bereich des ersten Plattenteils auf der Platte positioniert. Bei ebener Anordnung der beiden Plattenteile ist vorzugsweise eine rechteckige Gestaltung der Platte, somit der Gesamtplatte vorgesehen und es ist jedes Plattenteil gleichfalls rechteckig gestaltet, wobei die Plattenteile im Bereich benachbarter Seiten schwenkbar miteinander verbunden sind. Hierbei sollte die Abmessung der Unterlage bzw. der Platte in ebener Anordnung in Transportrichtung der Fördereinrichtung dem Abstand von Einrichtungen zum Festlegen eines Luftfrachtcontainers bei einem Transportanhänger bzw. Dolly entsprechen. Demzufolge weist bei einer zweiteiligen Gestaltung der Platte das zweite Plattenteil nur die Funktion eines Platzhalters auf, entsprechend den Abmessungen eines Luftfrachtcontainers zwischen Einrichtungen zu dessen Festlegen auf einem Transportanhänger bzw. Dolly. - Wird mittels des Transportanhängers bzw. des Dolly der Energieträger, der auf der Unterlage bzw. Platte angeordnet ist, transportiert, finden dieselben Einrichtungen zum Festlegen von Unterlage bzw. Platte Verwendung, wie beim Festlegen des Luftfrachtcontainers.

Damit der Energieträger beim Transport auf der Unterlage bzw. der Platte nicht verrutscht, sind vorzugsweise Mittel zum Fixieren des Energieträgers auf der Unterlage, insbesondere dem ersten Plattenteil der Unterlage vorgesehen.

Während die Unterlage mit der zweiteilig gestalteten Platte unter dem Aspekt der Lagerung des Energieträgers nur bezüglich des ersten Plattenteils notwendig ist und das zweite Plattenteil als Platzhalter beim Festlegen auf den Transportanhänger bzw. Dolly dient, ist das zweite Plattenteil bei der Anordnung des Energieträgers im Flughafenbodenfahrzeug zum Transportieren und/oder Heben von Frachtgütern nicht erforderlich und würde überdies nur unnötig Platz in horizontaler Richtung im Fahrzeug benötigen. Um diesen Nachteil zu vermeiden, ist gemäß einer Weiterbildung der Erfindung vorgesehen, dass bei von der Fördereinrichtung des Flughafenbodenfahrzeuges aufgenommener Unterlage mit Energieträger das zweite Plattenteil aus dem Förderniveau nach oben geschwenkt ist, insbesondere um 90° aus der Ebene des Förderniveaus nach oben geschwenkt ist. Horizontal wird im Fahrzeug von der Unterlage somit nur die Auflagefläche des ersten Plattenteils benötigt. Das zweite Plattenteil ist nach oben geschwenkt, steht insbesondere senkrecht zum ersten Plattenteil.

Um das zweite Plattenteil präzise bezüglich des ersten Plattenteils zu positionieren, sind vorzugsweise Fixiermittel zum Festlegen der beiden Plattenteile in der hochgeschwenkten Stellung des zweiten Plattenteils vorgesehen.

Bei dem erfindungsgemäßen elektrisch verfahrbaren Flughafenbodenfahrzeug handelt es sich insbesondere um ein Flugzeugbeladefahrzeug mit mindestens einer heb- und senkbaren Plattform, insbesondere mit zwei heb- und senkbaren Plattformen. Diese Fahrzeuge werden in der Fachsprache als Loader bezeichnet. Das Fahrzeug kann auch ausschließlich zum Transportieren oder zum Transportieren und Heben Verwendung finden. Diese Fahrzeuge werden in der Fachsprache als Transporter bzw. Loader-Transporter bezeichnet.

Das erfindungsgemäße Flughafenbodenfahrzeug ist beispielsweise bezüglich des Bereiches, in dem der Energieträger angeordnet ist, so gestaltet, dass das Fahrzeug im Bereich seines einer lenkbaren Achse zugewandten Endes eine Aufnahme, insbesondere einen Aufnahmeraum für den Energieträger aufweist. In diesen Aufnahmeraum ist auch die Fördereinrichtung integriert.

Weitere Merkmale der Erfindung ergeben sich aus den Unteransprüchen, der nachfolgenden Beschreibung der Zeichnung und der Zeichnung selbst.

Ein bevorzugtes Ausführungsbeispiel der Erfindung, einschließlich Abwandlungen, ist in der Zeichnung veranschaulicht und in der nachfolgenden Beschreibung erläutert, ohne hierauf beschränkt zu sein.

Es zeigt:
- Figur 1: in einer räumlichen Anordnung das erfindungsgemäße elektromotorisch antreibbare Flughafenbodenfahrzeug so- wie eine funktionell mit diesem zusammenwirkende gezo- gene Dolly-Anordnung,
- Figur 2: einen Längsmittelschnitt durch das erfindungsgemäße Flughafenbodenfahrzeug mit einem vor diesem stehenden, entladenen Dolly,
- Figur 3: eine vergrößerte Darstellung des in Figur 2 veranschaulich- ten vorderen Bereiches des Flughafenbodenfahrzeuges sowie des vor diesem platzierten entladenen Dolly,
- Figur 4: einen vertikalen Schnitt durch ein Dolly, parallel zu einer der Fahrzeugachsen des Dolly geschnitten, mit auf dem Dolly positionierten ULD-Luftfrachtcontainer,
- Figur 5: eine Schnittdarstellung des Dolly gemäß Figur 4, mit auf dem Dolly platzierter Unterlage und auf dieser platziertem Energieträger,
- Figuren 6 bis 9: unterschiedliche, bei der Fördereinrichtung des Flughafen- bodenfahrzeuges Verwendung findende Fördersysteme, veranschaulicht jeweils in einer räumlichen Darstellung und in einer vergrößerten Detaildarstellung.

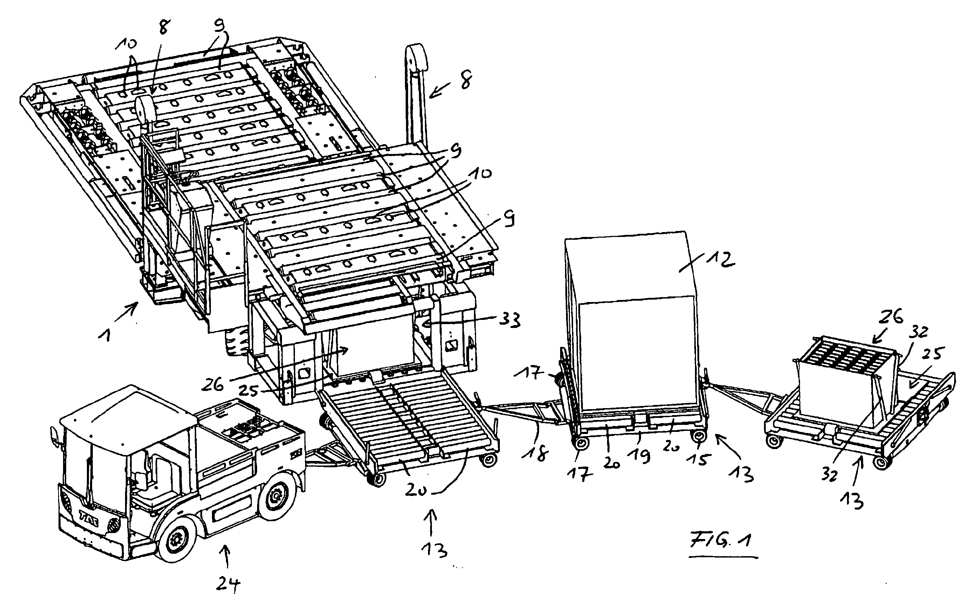

In Figur 1 ist ein elektromotorisch antreibbares Flughafenbodenfahrzeug 1 veranschaulicht, bei dem es sich um einen Loader handelt, der mit einer hinteren heb- und senkbaren Plattform 2 und einer vorderen heb- und senkbaren Plattform 3 versehen ist. Die hintere Plattform 2 ist wesentlich näher zum Niveau des Flughafenbodens 4 absenkbar, als die vordere Plattform 3. Im Bereich der hinteren Plattform 2 sind zwei relativ geringen Durchmesser aufweisende Hinterräder 5, im Bereich der vorderen Plattform 3 zwei wesentlich größeren Durchmesser aufweisende, lenkbare Vorderräder 6 im Rahmen 7 des Fahrzeugs 1 gelagert. Zum Heben der hinteren Plattform 2 sind zwei Hubmasten 8 vorgesehen. Gehoben wird die vordere Plattform 3 mittels unterhalb dieser angeordneter, nicht veranschaulichter Scheren.

Dem Fördern der Last auf den Plattformen 2 und 3 dienen zylindrische Transportrollen 9, die parallel zur Achse der Hinterräder 5 angeordnet und vorzugsweise antreibbar sind. Zwischen einem Teil der Rollen 9 sind zusätzlich Transportrollen 10 angeordnet, die vorzugsweise um Horizontale, in Längsrichtung des Fahrzeuges 1 angeordnete Achsen drehbar sind. Die Rollen 9 und 10 erlauben einen gradlinigen Transport eines Containers auf den beiden Plattformen 2 und 3, gegebenenfalls auch ein Drehen des Containers um eine vertikale Achse.

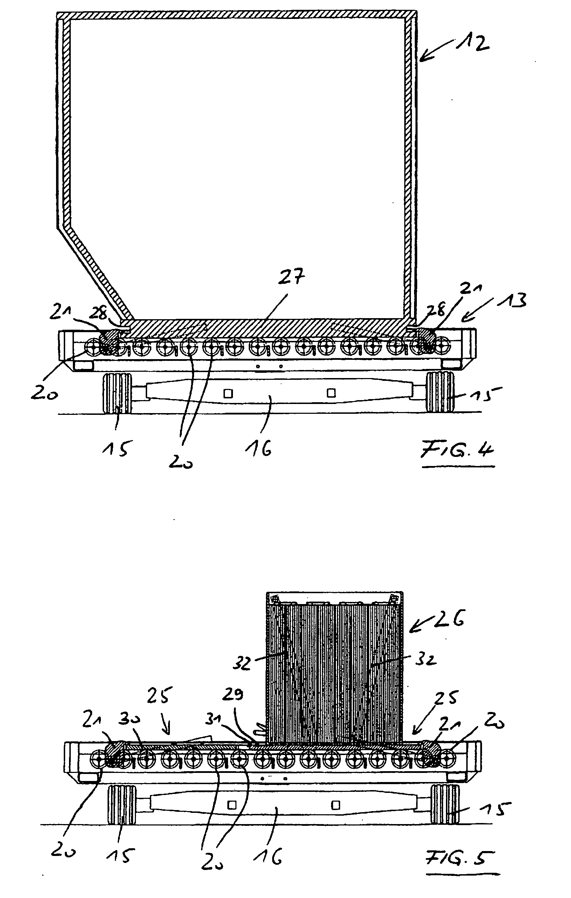

Die hintere Plattform 2 dient in abgesenkter Stellung beispielsweise der Aufnahme eines ULD-Luftfrachtcontainers 12, der auf einem Dolly 13 angeordnet ist, wie es beispielsweise in Figur 4 veranschaulicht ist. Dieser Dolly 13 weist eine hintere starre Achse 14 mit im Durchmesser kleinen Rädern 15 sowie eine vordere lenkbare Achse 16 mit entsprechend kleinen Rädern 17 und Deichsel 18 auf. Die Achsen 14 und 16 sind in einem Rahmen 19 des Dolly 13 gelagert. Im Rahmen 19 sind eine Vielzahl zylindrischer Rollen 20 gelagert, wobei deren Drehachse horizontal und senkrecht zur hinteren Achse 14 angeordnet ist.

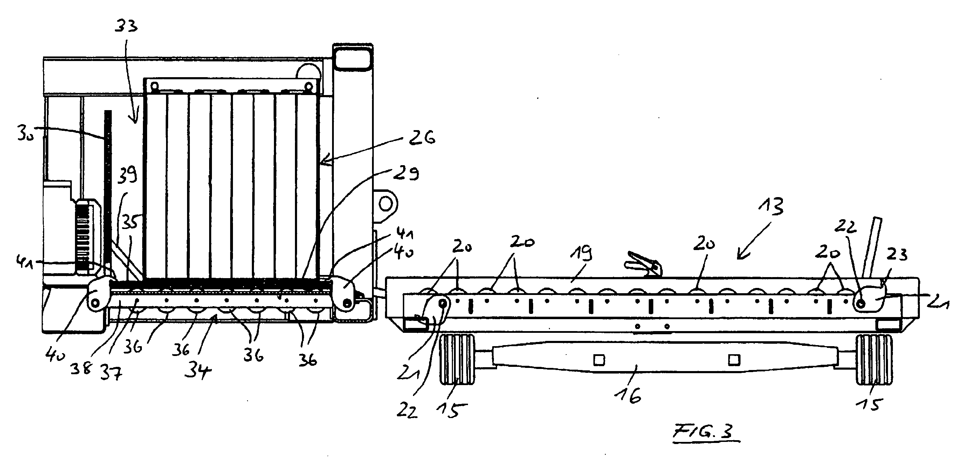

Wie der Darstellung der Figur 3 zu entnehmen ist, sind im Rahmen 19, beidseitig des Dolly, zumindest im Bereich der Achsen 14 und 16 schwenkbare Fixier haken 21 gelagert, die über Stellmittel um Achsen 22, die parallel zu den Drehachsen der Rollen 20 verlaufen, schwenkbar sind. Die Fixierhaken 21 sind in Figur 3 in deren Nicht-Fixierstellung veranschaulicht. Die Fixierhaken 21 weisen einen Vorsprung 23 auf.

Wie der Darstellung der Figur 1 zu entnehmen ist, werden mehrere identische Dollys 13, im vorliegenden Fall drei im Zugverband angeordnete Dollys 13, von einem Elektrofahrzeug 24 gezogen. Der erste, hinter dem Elektrofahrzeug 24 befindliche Dolly 13 ist leer, der zweite Dolly 13 mit einem ULD-Luftfrachtcontainer 12 beladen, der dritte Dolly 13 mit einer Unterlage 25 und einem auf diesem ruhenden Energieträger 26 beladen. Bei diesem Energieträger 26 handelt es sich um eine aufladbare Batterie 26, die die Form eines Quaders aufweist.

Der in den Figuren 1 und 4 auf dem Dolly 13 veranschaulichte ULD-Luftfrachtcontainer 12 ist nur deshalb gezeigt, um die Kompatibilität des Dollys 13 zur Lagerung des ULD-Luftfrachtcontainers 12 einerseits und zur Lagerung der Unterlage 25 mit der Batterie 26 andererseits zu verdeutlichen. So zeigt Figur 4 den Container 12 mit dessen Bodenteil 27 und dieses seitlich durchsetzenden Nuten 28, dass das Bodenteil 27 und damit der Container 12 mittels der in die Nuten 28 eingreifenden Vorsprünge 23 der Fixierhaken 21, die sich in deren Fixierstellung befinden, seitlich positioniert sind. In dieser Stellung der Fixierhaken 21 kann beim Bewegen des Dollys 13 der Container 12 nicht seitlich wegrollen und ist demzufolge fest mit dem Dolly 13 verbunden. Zum Überschieben des Containers 12 vom Dolly 13, beispielsweise auf ein anderes Fahrzeug, insbesondere die hintere Plattform 2 des Flughafenbodenfahrzeuges 1 werden die Fixierhaken 21 in deren Nicht-Fixierstellung verschwenkt, so dass der Container 12 mittels der Rollen 20 vom Dolly 13 gefördert werden kann.

Figur 5 zeigt für den anderen, entsprechend ausgebildeten Dolly 13 die auf den Rollen 20 des Dolly 13 aufliegende Unterlage 25. Diese ist als Platte ausgebildet, mit einem ersten Plattenteil 29 und einem schwenkbar mit diesem verbundenen zweiten Plattenteil 30. Die Schwenkachse 31 zwischen den beiden Plattteilen 29 und 30 verläuft parallel zur Drehachse der Rollen 20. Das erste Plattenteil 29 dient der Aufnahme der Batterie 26. Bezogen auf die horizontale Anordnung der beiden Plattenteile 29 und 30 entspricht deren Erstreckung zwischen den beidseitig des Dolly 13 angeordneten Fixierhaken 21 der Erstreckung des Bodenteils 27 des Containers 12 zwischen den Fixierhaken 21. Demzufolge kann die Unterlage 25, genauso wie das Bodenteil 27, zwischen den Fixierhaken 21 festgelegt werden. Diese festgelegte Stellung ist in Figur 5 gezeigt. Mit dem ersten Plattenteil 29 verbundene Streben 32 dienen dem Festlegen der Batterie 26 bezüglich des ersten Plattenteils 29.

In ebener Anordnung der beiden Plattenteile 29 und 30 ist die Unterlage 25 rechteckig und es ist jedes Plattenteil 29 bzw. 30 rechteckig mit identischer Kantenlänge im Bereich deren Schwenkachse 31.

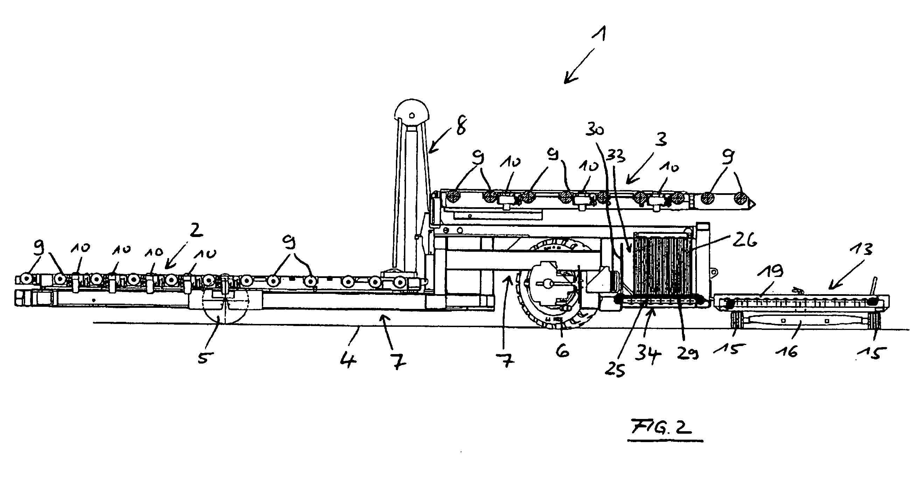

Wie insbesondere der Darstellung der Figuren 1 bis 3 zu entnehmen ist, weist der Loader 1 im Bereich seines vorderen Endes, somit im Bereich des Endes, das seiner lenkbaren Achse 6 zugeordnet ist, einen Aufnahmeraum 33 für die Batterie 26 auf. Im Bereich dieses Aufnahmeraums 33 ist der Loader 1 mit einer Fördereinrichtung 34 zum Aufnehmen und horizontalen Transportieren der Batterie 24 versehen. Hierbei kontaktiert die Fördereinrichtung 34 unmittelbar die Unterlage 25, konkret deren erstes Plattenteil 29, auf deren oberen Fläche 35 die Batterie 26 aufliegt. Im gezeigten Ausführungsbeispiel ist die Fördereinrichtung 34 durch mehrere zylindrische Rollen 36 gebildet, die um Achsen 37 in einem Lagerteil 38 des Fahrzeugs 1 drehbar gelagert sind. Da der horizontale Bauraum des Fahrzeugs 1 im Bereich des Aufnahmeraums 33 kürzer ist als die horizontale Erstreckung der Unterlage 25 bei eben angeordneten Plattenteilen 29 und 30, ist bei vom Aufnahmeraum 33 aufgenommener Unterlage 25 und Batterie 26 das zweite Plattenteil 30 um 90°, somit in eine vertikale Position bezüglich des ersten Plattenteils 29 verschwenkt. In dieser Winkelanordnung der beiden Plattenteile 29 und 30 dienen Streben 39 dem Positionieren des zweiten Plattenteils 30 bezüglich des ersten Plattenteils 29. Dem Fixieren des ersten Plattenteils 29 bezüglich des Aufnahmeraums 33 bzw. der Fördereinrichtung 34 dienen beidseitig des ersten Plattenteils 29 angeordnete, entsprechend der Fixierhaken 21 ausgebildete Fixierhaken 40, die in einer Fixierposition, gemäß der Darstellung in Figur 3, mit deren Vorsprüngen 41 beidseitig das erste Plattenteil 29 hintergreifen und somit in Förderrichtung der Fördereinrichtung 34 festlegen. Damit ist die Unterlage 25 und die auf dieser positionierte Batterie 26 im Loader 1 festgelegt.

Bei vor dem Loader 1 gemäß der Darstellung in den Figuren 1 und 3 positioniertem leeren Dolly 13 erfolgt das Austauschen einer entladenen Batterie 26 gegen eine geladene Batterie, die auf dem dritten, hinter dem Elektrofahrzeug 24 befindenden Dolly 13 angeordnet ist, wie folgt:

Es werden, bezogen auf die Darstellung in Figur 3, die Fixierhaken 40 des Loaders 1 aus deren gezeigten Fixierstellung in deren Nicht-Fixierstellung überführt und es kann dann die Unterlage 25 mit der darauf befindlichen Batterie 26 aus dem Aufnahmeraum 33 des Loaders 1 herausgezogen werden, indem das erste Plattenteil 29 auf den Rollen 36 abläuft. Gegebenenfalls können Mittel zum Antreiben dieser Rollen vorgesehen sein. Die Unterlage 25 wird auf die auf dem selben Niveau wie das Förderniveau der Fördereinrichtung 34 befindliche Rollenbahn des Dolly 13 übergeschoben und nach dem Lösen der Streben 29 das zweite Plattenteil 30 um 90° verschwenkt, so dass es eine Ebene mit dem ersten Plattenteil 29 dient und demnach beide Plattenteile 29 und 30 auf den Rollen 20 des Dolly aufliegen. Die Unterlage 25 wird bezüglich der beiden Fixierhaken 21 ausgerichtet und diese dann in deren Fixierstellung geschwenkt, in der die Vorsprünge 23 der Fixierhaken 21 die ebene Unterlage 25 hintergreifen.

Anschließend verfährt das Elektrofahrzeug 24 in eine Stellung, in der der dritte Dolly 13 mit der auf diesem ruhende geladenen Batterie 26 vor dem Loader 1 im Bereich dessen leeren Aufnahmeraum 23 positioniert ist, somit in einer Stellung gemäß Figur 3, allerdings bei beladenem Dolly 13. Vor dem Überschieben der geladenen Batterie 36 in den Aufnahmeraum 33 werden die Fixierhaken 21 dieses Dollys 13 in deren Nicht-Fixierstellung geschwenkt und das zweite Plattenteil 30 der Unterlage 25 in deren bezüglich des ersten Plattenteils 29 senkrechte Stellung geschwenkt und in dieser Position mittels der Streben 39 fixiert. Dann wird die Unterlage 25 mit der Batterie 26 von der Rollenanordnung dieses Dollys zur Fördereinrichtung 34 des Loaders 1 übergeben, in die in Figur 3 gezeigte Position, in der die Fixierhaken 40 in deren Fixierstellung überführt werden und damit das erste Plattenteil 29 mit der darauf befindlichen Batterie 26 positionieren. Dieser beladene Zustand ist in Figur 3 gezeigt.

Nicht veranschaulicht sind zur Batterie 26 elektrische Anschlüsse zum Verbinden der Batterie 26 mit dem Loader 1.

Vorstehende Ausführungen verdeutlichen, dass das Handling der Batterie 26 beim Wechsel einer Batterie des Loaders 1, bezogen auf den Dolly 13, mit dem Handling beim Be- und Entladen eines Dollys 13, der einen ULD-Luftfrachtcontainer 12 trägt, übereinstimmt.

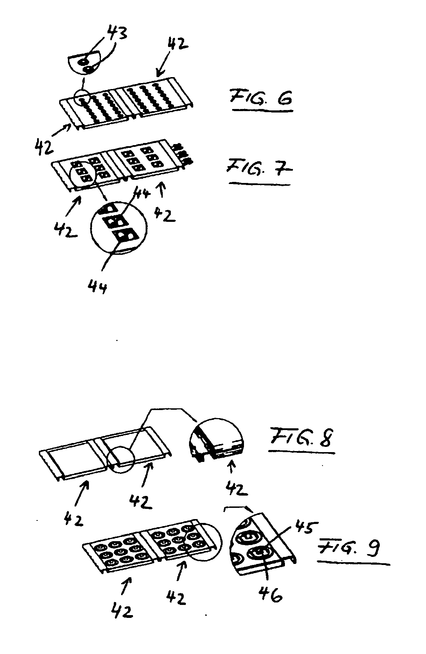

Die Gestaltung der Fördereinrichtung 34 ist nicht auf die gezeigte Anordnung der frei drehbaren oder angetriebenen zylindrischen Rollen 36 beschränkt. Es können durchaus andere Gestaltungen der Fördereinrichtung Verwendung finden. Figur 6 zeigt die aus mehreren Segmenten 42 gebildete Fördereinrichtung 34, wobei das jeweilige Segment 42 eine Vielzahl von Kugelrollen 43 zum Fördem der Unterlage 25 aufweist. Bei der Ausbildung nach Figur 7 nehmen die Segmente 42 sogenannte Multirollen 44 auf. Bei der Ausführungsform nach der Figur 8 ist die Fördereinrichtung 34 so ausgebildet, dass die Segmente 42 Segmente eines umlaufenden Förderbandes bilden. Figur 9 zeigt eine Ausführungsform der Fördereinrichtung 34, bei der die Segmente 42 Rollen 45 aufweisen, die in einem Lagerelement drehbar gelagert sind, das senkrecht zur Lagerachse der jeweiligen Rolle 45 drehbar gelagert ist.

Die vorstehend erörterten Gestaltungen der Fördereinrichtung 34 erlauben es, bei konstruktiv unterschiedlicher Gestaltung, die Batterie 26 nicht nur in Ein- und Ausfahrrichtung, die durch den Aufnahmeraum 33 definiert ist, zu verfahren, sondern auch seitlich hierzu, um eine exakte Ausrichtung der Batterie 26 im Aufnahmeraum 23 und auch bezüglich des angedockten Dolly 13 zu gewährleisten.

Die Erfindung ist nicht auf ein elektromotorisch antreibbares Flughafenbodenfahrzeug beschränkt, sondern kann auch bei einem Fahrzeug Verwendung finden, bei dem neben einem Elektromotor ein anderes Antriebsaggregat Verwendung findet. Vorliegend kommt es primär darauf an, eine Lösung bei einem Fahrzeug für einen einfachen, unkomplizierten Wechsel eines Energieträgers 26 bereitzustellen, der im Ausführungsbeispiel als aufladbare Batterie ausgebildet ist. Dieser Energieträger dient somit dem Antreiben eines nicht näher veranschaulichten Elektromotors des Loaders 1 und über diesen Elektromotor dem Antreiben der unterschiedlichen Aggregate zum Betreiben der diversen Funktionen des Loaders 1. Der Loader kann durchaus als Hybridfahrzeug unter Verwendung des Energieträgers 27 gestaltet sein.

## Patentansprüche

1. Elektromotorisch antreibbares Flughafenbodenfahrzeug (1) zum Transportieren und/oder Heben von Frachtgütern (12), mit einem Energieträger (26) für den Elektromotor und einer Fördereinrichtung (34) zum Aufnehmen und horizontalen Transportieren des Energieträgers (26), wobei die Fördereinrichtung (34) eine Unterseite einer Unterlage (25) für den Energieträger (26) kontaktiert, **dadurch gekennzeichnet, dass** die Unterlage (25) als Platte ausgebildet ist, wobei die Platte (25) ein erstes Plattenteil (29) und ein schwenkbar mit diesem verbundenes zweites Plattenteil (30) aufweist, wobei das erste Plattenteil (29) der Aufnahme des Energieträgers (26) dient.

2. Fahrzeug nach Anspruch 1, wobei in einem Fahrgestell (7) des Fahrzeugs (1) die Fördereinrichtung (34) stationär gelagert ist.

3. Fahrzeug nach Anspruch 1 oder 2, wobei die Fördereinrichtung (34) mindestens ein Transportband, eine Rollenbahn mit mehreren parallel zueinander angeordneten Transportwalzen (36) oder ein Rollenbett mit Kugelrollen, Multirollensystem, Cargo Caster Rollen, Stuhlrollen, Helirollen oder dergleichen aufweist.

4. Fahrzeug nach einem der Ansprüche 1 bis 3, wobei der Energieträger (26) ein Energiespeicher ist, der chemische Energie speichert, insbesondere eine aufladbare Batterie (26) ist oder der Energieträger ein Energiewandler ist, der chemische Energie wandelt, vorzugsweise eine Brennstoffzelle ist, insbesondere eine Wasserstoff-Sauerstoff-Brennstoffzelle ist.

5. Fahrzeug nach einem der Ansprüche 1 bis 4, wobei das Förderniveau der Fördereinrichtung (34) dem Förderniveau einer Fördereinrichtung eines Transportanhängers zum Transportieren eines Luftfrachtcontainers, insbesondere dem Förderniveau einer Rollenbahn (20, 20) eines Dollys (13) zum Transportieren eines ULD-Luftfrachtcontainers (12) entspricht.

6. Fahrzeug nach einem der Ansprüche 1 bis 5, wobei in ebener Anordnung der beiden Plattenteile (29, 30) die Unterlage (25) rechteckig ist und jedes Plattenteil (29 bzw. 30) rechteckig ist sowie die Plattenteile (29, 30) im Bereich benachbarter Seiten schwenkbar miteinander verbunden sind.

7. Fahrzeug nach einem der Ansprüche 1 bis 6, wobei die Abmessung der Unterlage (25) bzw. der Plattenteile (29, 30) in ebener Anordnung in Transportrichtung der Fördereinrichtung (34) dem Abstand von Einrichtungen (21, 21) zum Festlegen eines Luftfrachtcontainers (12) entspricht, der auf einem Transportanhänger bzw. Dolly (13) angeordnet ist.

8. Fahrzeug nach einem der Ansprüche 1 bis 7, wobei Mittel (32) zum Fixieren des Energieträgers (26) auf der Unterlage (25), insbesondere auf dem ersten Plattenteil (29) der Unterlage (25) vorgesehen sind.

9. Fahrzeug nach einem der Ansprüche 1 bis 8, wobei bei von der Fördereinrichtung (34) des Flughafenbodenfahrzeugs (1) aufgenommener Unterlage (24) mit Energieträger (26) das zweite Plattenteil (30) aus der Ebene des Förderniveaus nach oben geschwenkt ist, insbesondere um 90° aus der Ebene des Förderniveaus nach oben geschwenkt ist.

10. Fahrzeug nach Anspruch 9, wobei Mittel (40) zum Fixieren des ersten Plattenteils (29) bezüglich der Fördereinrichtung (34) und/oder Mittel (39) in den beiden Plattenteilen (29, 30) zum Festlegen des zweiten Plattenteils (30) bezüglich des ersten Plattenteils (29) in der hochgeschwenkten Stellung des zweiten Plattenteils (30) vorgesehen sind.

11. Fahrzeug nach einem der Ansprüche 1 bis 10, wobei der Energieträger (26) eine kastenförmige bzw. quaderförmige Form aufweist.

12. Fahrzeug nach einem der Ansprüche 1 bis 11, wobei das Flughafenbodenfahrzeug (1) ein Flugzeugbeladefahrzeug (1) mit mindestens einer heb- und senkbaren Plattform (2, 3) ist.

13. Fahrzeug nach einem der Ansprüche 1 bis 12, wobei das Flughafenbodenfahrzeug (1) im Bereich seines einer lenkbaren Achse zugewandten Endes eine Aufnahme, insbesondere einen Aufnahmeraum (33) für den Energieträger (26) aufweist.

## Claims

1. Airport ground vehicle (1) that can be driven by an electric motor, for transporting and/or lifting freight (12), having an energy carrier (26) for the electric motor and a conveying device (34) for holding and horizontally transporting the energy carrier (26), wherein the conveying device (34) comes into contact with an underside of a support (25) for the energy carrier, **characterized in that** the support (25) is in the form of a plate, wherein the plate (25) has a first plate part (29) and a second plate part (30) that is connected in a pivotable manner to said first plate part (29), wherein the first plate part (29) serves to hold the energy carrier (26).

2. Vehicle according to Claim 1, wherein the conveying device (34) is mounted in a stationary manner in a chassis (7) of the vehicle (1).

3. Vehicle according to Claim 1 or 2, wherein the conveying device (34) has at least one transporting belt, a roller conveyor having a plurality of transporting rolls (36) that are arranged parallel to one another, or a roller bed having ball-type rollers, a multi-roller system, cargo caster rollers, chair casters, helirolls or the like.

4. Vehicle according to one of Claims 1 to 3, wherein the energy carrier (26) is an energy store, which stores chemical energy, in particular a rechargeable battery (26), or the energy carrier is an energy converter, which converts chemical energy, preferably a fuel cell, in particular a hydrogen-oxygen fuel cell.

5. Vehicle according to one of Claims 1 to 4, wherein the conveying level of the conveying device (34) corresponds to the conveying level of a conveying device on a transport trailer for transporting an airfreight container, in particular the conveying level of a roller conveyor (20, 20) of a dolly (13) for transporting a ULD airfreight container (12).

6. Vehicle according to one of Claims 1 to 5, wherein, with the two plate parts (29, 30) being arranged in a planar manner, the support (25) is rectangular and each plate part (29 or 30) is rectangular and the plate parts (29, 30) are connected together in a pivotable manner in the region of adjacent sides.

7. Vehicle according to one of Claims 1 to 6, wherein the dimension of the support (25) or of the plate parts (29, 30) arranged in a planar manner in the transporting direction of the conveying device (34) corresponds to the spacing of devices (21, 21) for fastening an airfreight container (12) which is arranged on a transport trailer or dolly (13).

8. Vehicle according to one of Claims 1 to 7, wherein there are provided means (32) for fixing the energy carrier (26) on the support (25), in particular on the first plate part (29) of the support (25).

9. Vehicle according to one of Claims 1 to 8, wherein, when the support (24) having the energy carrier (26) is held on the conveying device (34) of the airport ground vehicle (1), the second plate part (30) is pivoted upwards out of the plane of the conveying level, in particular is pivoted upwards through 90° out of the plane of the conveying level.

10. Vehicle according to Claim 9, wherein there are provided means (40) for fixing the first plate part (29) with respect to the conveying device (34) and/or means (39) in the two plate parts (29, 30) for fastening the second plate part (30) with respect to the first plate part (29) in the pivoted-up position of the second plate part (30).

11. Vehicle according to one of Claims 1 to 10, wherein the energy carrier (26) has a box-like or cuboidal form.

12. Vehicle according to one of Claims 1 to 11, wherein the airport ground vehicle (1) is an aircraft loading vehicle (1) having at least one platform (2, 3) that can be raised and lowered.

13. Vehicle according to one of Claims 1 to 12, wherein, in the region of its end facing a steerable axle, the airport ground vehicle (1) has a holder, in particular a holding space (33), for the energy carrier (26).

## Revendications

1. Véhicule aéroportuaire au sol (1) entraîné par moteur électrique pour transporter et/ou soulever des biens de fret (12), avec une source d'énergie (26) pour le moteur électrique et un dispositif de transport (34) pour recevoir et transporter à l'horizontale la source d'énergie (26), le dispositif de transport (34) entrant en contact avec un côté inférieur d'un support (25) pour la source d'énergie (26), **caractérisé en ce que** le support (25) prend la forme d'une plaque, la plaque (25) comportant une première partie de plaque (29) et une deuxième partie de plaque (30) reliée de façon pivotante à celle-ci, la première partie de plaque (29) servant à recevoir la source d'énergie (26).

2. Véhicule automobile selon la revendication 1, le dispositif de transport (34) étant disposé de façon stationnaire dans un châssis (7) du véhicule automobile (1).

3. Véhicule automobile selon la revendication 1 ou 2, le dispositif de transport (34) comportant au moins un tapis roulant, un convoyeur à rouleaux avec plusieurs rouleaux de transport (36) disposés parallèlement les uns par rapport aux autres ou un lit de rouleaux doté de rouleaux sphériques, d'un système multi-rouleaux, d'un système de roulettes de type roulettes d'avion-cargo, de roulettes de chaise, de tapis de roulettes ou leur équivalent.

4. Véhicule automobile selon l'une quelconque des revendications 1 à 3, la source d'énergie (26) étant un accumulateur d'énergie qui accumule de l'énergie chimique, notamment une batterie (26) rechargeable ou la source d'énergie est un convertisseur d'énergie qui convertit de l'énergie chimique, de préférence une pile à combustible, notamment une pile à combustible hydrogène - oxygène.

5. Véhicule automobile selon l'une quelconque des revendications 1 à 4, le niveau de transport du dispositif de transport (34) correspondant au niveau de transport d'un dispositif de transport d'une remorque de transport prévue pour transporter des conteneurs de fret aérien, notamment au niveau de transport d'un convoyeur à rouleaux (20, 20) d'un socle roulant (13) servant à transporter un conteneur de fret aérien (12) ULD.

6. Véhicule automobile selon l'une quelconque des revendications 1 à 5, le support (25) étant rectangulaire dans le dispositif plan des deux parties de plaque (29, 30) et chaque partie de plaque (29 et/ou 30) étant rectangulaire, les parties de plaque (29, 30) étant reliées entre elles de façon pivotante dans la zone des côtés voisins.

7. Véhicule automobile selon l'une quelconque des revendications 1 à 6, la dimension du support (25) et/ou des parties de plaque (29, 30) dans l'agencement plan, dans la direction de transport du dispositif de transport (34), correspondant à la distance à partir des dispositifs (21, 21) pour fixer un conteneur de fret aérien (12) disposé sur une remorque de transport et/ou un socle roulant (13).

8. Véhicule automobile selon l'une quelconque des revendications 1 à 7, des moyens (32) de fixation de la source d'énergie (26) sur le support (25), notamment sur la première partie de plaque (29) du support (25), étant prévus.

9. Véhicule automobile selon l'une quelconque des revendications 1 à 8, la deuxième partie de plaque (30) étant pivotée vers le haut avec la source d'énergie (26) à partir du plan du niveau de transport en présence d'un support (24) reçu par le dispositif de transport (34) du véhicule aéroportuaire au sol (1), notamment pivoté de 90° vers le haut à partir du plan du niveau de transport.

10. Véhicule automobile selon la revendication 9, les moyens (40) de fixation de la première partie de plaque (29) par rapport au dispositif de transport (34) étant prévus et/ou des moyens (39) étant prévus dans les deux parties de plaque (29, 30) pour fixer la deuxième partie de plaque (30) par rapport à la première partie de plaque (29) dans la position pivotée vers le haut de la deuxième partie de plaque (30).

11. Véhicule automobile selon l'une quelconque des revendications 1 à 10, la source d'énergie (26) présentant une forme de caisson et/ou une forme de parallélépipède rectangle.

12. Véhicule automobile selon l'une quelconque des revendications 1 à 11, le véhicule aéroportuaire au sol (1) étant un véhicule automobile (1) de chargement d'avion avec au moins une plateforme soulevable et abaissable (2, 3).

13. Véhicule automobile selon l'une quelconque des revendications 1 à 12, le véhicule aéroportuaire au sol (1) comportant dans la zone de son extrémité orientée vers l'essieu dirigeable un logement, notamment un espace de logement (33) pour la source d'énergie (26).
